# NEUE EUROPÄISCHE PATENTSCHRIFT

(11) **EP 1 357 267 B2**
(45) Veröffentlichungstag und Bekanntmachung des Hinweises auf die Entscheidung über den Einspruch: **27.08.2014**
(45) Hinweis auf die Patenterteilung: 16.11.2005
(21) Anmeldenummer: 03006434.9
(22) Anmeldetag: 21.03.2003
(51) Int. Cl.: F01N 3/20, F01N 1/08

(54) **Abgasanlage für einen Dieselmotor und zugehöriger Schalldämpfer**
Exhaust gas treating apparatus with silencer for a diesel engine
Système de ligne d'échappement avec silencieux pour un moteur diesel

(30) Priorität: 24.04.2002 DE 10218255
(43) Veröffentlichungstag der Anmeldung: 29.10.2003
(73) Patentinhaber: Eberspächer Exhaust Technology GmbH & Co. KG, 66539 Neunkirchen (DE)
(72) Erfinder: Hauber, Thomas, Dr., 73776 Altbach (DE); Buhmann, Rudolf, 73732 Esslingen (DE); Werni, Marcus, 71334 Waiblingen (DE); Wörner, Siegfried, 73734 Essinglen (DE)
(74) Vertreter: BRP Renaud & Partner

(56) Entgegenhaltungen:
- EP-A- 0 907 010
- EP-A1- 1 052 009
- DE-A- 10 020 100
- DE-A- 19 913 462
- DE-A1- 4 038 054
- DE-A1- 19 629 980
- DE-A1- 19 922 935
- DE-A1- 19 952 428
- DE-C2- 19 741 199

## Beschreibung

Die vorliegende Erfindung betrifft eine Abgasanlage für einen Dieselmotor, insbesondere eines Kraftfahrzeugs. Die Erfindung betrifft außerdem einen Schalldämpfer für eine solche Abgasanlage.

Bei Dieselmotoren können die NOₓ-Emissionen mit Hilfe eines sogenannten SCR-Katalysators (Katalysator für selektive katalytische Reduktion) reduziert werden. Dabei werden in einem derartigen SCR-Katalysator im mageren Abgas Stickoxide mit Ammoniak zu Stickstoff und Wasser bzw. Wasserdampf umgesetzt. Da Ammoniak in den Verbrennungsabgasen eines Dieselmotors üblicherweise nicht enthalten ist, erfolgt stromauf des SCR-Katalysators eine künstliche Anreicherung der Abgase mit Ammoniak. Zweckmäßig erfolgt dies mit Hilfe eines dem SCR-Katalysator vorgeschalteten Hydrolysekatalysators, der Harnstoff in Ammoniak umsetzt (z.B. DE 10020100). Da die Verbrennungsabgase eines Dieselmotors üblicherweise auch keinen Harnstoff enthalten, muss auch dieser stromauf des Hydrolysekatalysators künstlich in die Abgase eingebracht werden. Dies kann beispielsweise mit Hilfe einer Harnstoffzuführungseinrichtung erfolgen, die stromauf des Hydrolysekatalysators den Harnstoff in Form einer wässrigen Lösung in das Abgas einbringt, insbesondere eindüst.

Um die Leistungsfähigkeit des SCR-Katalysators bei relativ niedrigen Abgastemperaturen zu steigern, kann stromauf des SCR-Katalysators außerdem ein Oxidationskatalysator angeordnet sein, der im mageren Abgas Stickoxide mit Sauerstoff zu NO₂ umsetzt. Dieses NO₂ kann bei niedrigeren Abgastemperaturen im SCR-Katalysator besser umgesetzt werden, so dass sich die NOₓ-Umsatzrate des SCR-Katalysators entsprechend erhöht.

Zur Vermeidung einer Oxidation des Harnstoffs im Oxidationskatalysator, muss der Harnstoff stromab des Oxidationskatalysators in das Abgas eingebracht werden. Damit sich im SCR-Katalysator eine relativ hohe Umsatzrate für die Stickoxide erzielen lässt, ist eine relativ gute Durchmischung des Harnstoffs mit dem Abgas erforderlich. Eine hinreichende Durchmischung kann beispielsweise dann gewährleistet werden, wenn eine relativ lange Mischstrecke zur Verfügung steht. Bei einer solchen Reihenschaltung von Oxidationskatalysator, Harnstoffzuführungseinrichtung, Hydrolysekatalysator, Mischstrecke und SCR-Katalysator ergibt sich für die gesamte Abgasanlage eine relativ große Länge die für eine Vielzahl von Anwendungsformen, insbesondere bei Kraftfahrzeugen, aufgrund des regelmäßig herrschenden Platzmangels ungeeignet ist.

Die vorliegende Erfindung beschäftigt sich mit dem Problem, für eine Abgasanlage der eingangs genannten Art eine verbesserte Ausführungsform anzugeben, die insbesondere einen relativ kompakten Aufbau besitzt.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Hydrolysekatalysator mit vorgeschalteter Harnstoffzuführungseinrichtung und den Oxidationskatalysator parallel zu schalten, das heißt Hydrolysekatalysator und Oxidationskatalysator werden nicht hintereinander vom Gesamtabgasstrom, sondern gleichzeitig von getrennten Teilabgasströmen durchströmt. Diese Parallelschaltung begünstigt eine parallele Anordnung der einzelnen Katalysatoren und ermöglicht somit für die Abgasanlage einen kompakten Aufbau und einen reduzierten Abgasgegendruck.

Zu diesem Zweck ist die erfindungsgemäße Abgasanlage mit wenigstens drei parallel geschalteten Abgaswegen ausgestattet, die stromauf des SCR-Katalysators wieder zusammengeführt sind. In dem einen Abgasweg sind dann der Hydrolysekatalysator und die Harnstoffzuführungseinrichtung angeordnet, während in dem oder den anderen Abgaswegen jeweils wenigstens ein Oxidationskatalysator untergebracht ist.

Entsprechend einer besonderen Weiterbildung können die Strömungswiderstände der Abgaspfade hinsichtlich einer vorbestimmten oder gewünschten Aufteilung des Abgasstroms auf den Hydrolysekatalysator und auf die Oxidationskatalysatoren ausgebildet sein. Durch diese Maßnahme kann eine rechnerisch oder empirisch ermittelte optimale Abgasaufteilung für den Betrieb der Abgasanlage besonders einfach gewährleistet werden, beispielsweise in dem die Strömungsquerschnitte der einzelnen Abgaspfade entsprechend dimensioniert werden.

Von besonderem Vorteil ist eine Weiterbildung, bei der die Abgasanlage einen Schalldämpfer aufweist, wobei wenigstens einer der Katalysatoren und/oder die Harnstoffzuführungseinrichtung in einem Gehäuse dieses Schalldämpfers angeordnet ist bzw. sind. Durch die Integration wenigstens eines Katalysators bzw. der Harnstoffzuführungseinrichtung in den Schalldämpfer ergibt sich für die Abgasanlage eine besonders kompakte Bauweise.

Dementsprechend führt eine Weiterbildung, bei der die parallel geschalteten Abgaswege ebenfalls im Gehäuse des Schalldämpfers verlaufen, zu einer weiteren Komprimierung des Aufbaus der Abgasanlage.

Zweckmäßig erfolgt die Unterbringung des Hydrolysekatalysators einschließlich der Harnstoffzuführungseinrichtung sowie des Oxidationskatalysators in diesen Abgaswegen so, dass sich auch Hydrolysekatalysator, Harnstoffzuführungseinrichtung und Oxidationskatalysator im Inneren des Gehäuses des Schalldämpfers befinden.

Gemäß einer weiteren vorteilhaften Ausführungsform kann auch der SCR-Katalysator im Gehäuse des Schalldämpfers angeordnet sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine stark vereinfachte Prinzipdarstellung einer Abgasanlage nach der Erfindung,
- Fig. 2: eine perspektivische Ansicht auf einen Schalldämpfer nach der Erfindung.

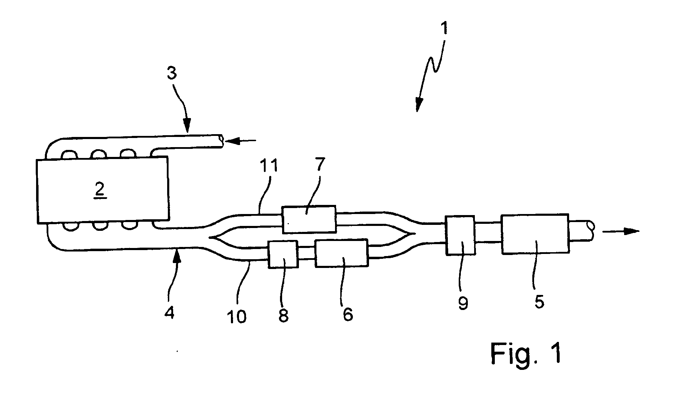

Entsprechend Fig. 1 dient eine Abgasanlage 1 nach der Erfindung zum Abführen von Abgasen von einer Brennkraftmaschine 2, z.B. ein Dieselmotor, insbesondere eines Kraftfahrzeugs. An die Brennkraftmaschine bzw. an den Dieselmotor 2 ist eingangsseitig ein Frischgasstrang 3 angeschlossen, während ausgangsseitig ein Abgasstrang 4 der Abgasanlage 1 an den Dieselmotor 2 angeschlossen ist.

Die Abgasanlage 1 umfasst einen SCR-Katalysator 5 und stromauf davon einen Hydrolysekatalysator 6 sowie wenigstens zwei Oxidationskatalysator 7. Stromauf des Hydrolysekatalysators 6 ist außerdem eine Harnstoffzuführungseinrichtung 8 angeordnet. Des Weiteren befindet sich zwischen dem Hydrolysekatalysator 6 und dem SCR-Katalysator 5 eine Mischeinrichtung 9. Der Abgasstrang 4 ist stromauf des SCR-Katalysators 5 in wenigstens zwei Abgaswege 10 und 11 aufgezweigt, die parallel vom Abgas durchströmbar sind und stromauf des SCR-Katalysators 5 wieder zusammengeführt sind. In dem einen Abgasweg 10 sind der Hydrolysekatalysator 6 und die Harnstoffzuführungseinrichtung 8 angeordnet, während im anderen Abgasweg 11 der Oxidationskatalysator 7 untergebracht ist.

Obwohl in Fig. 1 nur ein Oxidationskatalysator 7 dargestellt ist, der parallel zum Hydrolysekatalysator 6 geschaltet ist, sind mehrere Oxidationskatalysatoren 7 vorgesehen , die jeweils parallel zum Hydrolysekatalysator 6 und insbesondere jeweils in einem separaten anderen Abgasweg 11 angeordnet sind.

Die erfindungsgemäße Abgasanlage 1 arbeitet wie folgt:

Üblicherweise wird der Dieselmotor 2 mager, das heißt mit Sauerstoffüberschuß betrieben. Dementsprechend erzeugt der Dieselmotor 2 magere Abgase. Die vom Dieselmotor 2 erzeugten mageren Abgase verzweigen sich bei den Abgaswegen 10 und 11 in wenigstens drei Teilströme, die parallel die beiden Abgaswege 10 und 11 durchströmen. In dem einen Abgasweg 10 erfolgt bei der Harnstoffzuführungseinrichtung 8 eine Zugabe von Harnstoff in den Abgasteilstrom. Die Harnstoffzugabe erfolgt zweckmäßig in Form einer wässrigen Lösung, die in den Abgasstrom eindüst wird. Im stromab nachfolgenden Hydrolysekatalysator 6 erfolgt dann eine Umsetzung des Harnstoffs in Ammoniak. Dementsprechend wird der durch den einen Abgasweg 10 strömende Abgasstroms mit Ammoniak angereichert. Im anderen Abgasweg 11 erfolgt im Oxidationskatalysator 7 eine Umsetzung von Stickoxiden (NOₓ) in Stickstoffdioxid (NO₂). Der hierfür erforderliche Sauerstoff ist im mageren Abgas vorhanden. Dementsprechend wird dieser Abgasteilstrom mit NO₂ angereichert.

Stromauf des SCR-Katalysators 5 sind die Abgaswege 10 und 11 zusammengeführt, wodurch auch die Teilströme wieder vereint werden. Damit sich stromauf des SCR-Katalysators 5 die Teilströme intensiv durchmischen können, ist die Mischeinrichtung 9 stromauf des SCR-Katalysators 5 und stromab der Zusammenführung der Abgaswege 10, 11 angeordnet. Die Mischeinrichtung 9 ist in geeigneter Weise so ausgebildet, dass sie bei ihrer DurchStrömung eine intensive Durchmischung bewirkt. Eine derartige Mischeinrichtung 9 kann beispielsweise einen Zyklon oder dergleichen aufweisen.

Im SCR-Katalysator 5 kann nun eine Umsetzung von Stickoxiden mit Ammoniak zu Stickstoff und Wasser bzw. Wasserdampf erfolgen. Dabei können Stickstoffdioxide besonders einfach umgesetzt werden, wodurch die Wirkung des SCR-Katalysators 5, insbesondere bei relativ niedrigen Abgastemperaturen, gesteigert werden kann.

Mit Hilfe einer entsprechenden, hier nicht dargestellten Steuerung kann die Zumischung bzw. Eindüsung des Harnstoffs so dosiert werden, dass sich eine optimale Anpassung an den momentanen NOₓ-Gehalt und an die physikalischen Bedingungen des Abgases, wie z.B. Temperatur und Massenstrom, ergibt.

Da die Abgaswege 10 und 11 parallel zueinander verlaufen, können der Oxidationskatalysator 7 und der Hydrolysekatalysator 6 sowie die Harnstoffzuführungseinrichtung 8 raumsparend parallel nebeneinander angeordnet werden.

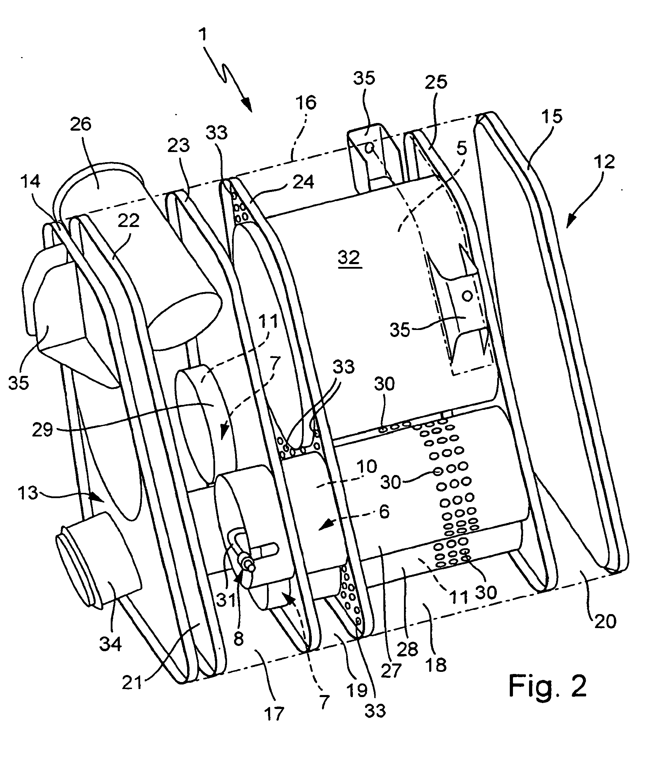

Eine besonders kompakte Bauweise für die erfindungsgemäße Abgasanlage 1 ist in Fig. 2 wiedergegeben, bei der die wesentlichen Komponenten der Abgasanlage 1 in einen Schalldämpfer 12 integriert sind. Der Schalldämpfer 12 besitzt ein Gehäuse 13, das zwei endseitige Deckel 14 und 15 sowie eine sich zwischen den Deckeln 14, 15 erstreckende Wandung 16 aufweist. Zur besseren Darstellbarkeit ist in Fig. 2 die Wandung 16 transparent dargestellt und mit unterbrochenen Linien angedeutet.

Das Gehäuse 13 enthält eine erste Kammer 17, eine zweite Kammer 18, eine dritte Kammer 19, eine vierte Kammer 20 und eine fünfte Kammer 21. Die einzelnen Kammern 17 bis 21 sind durch Trennwände, nämlich durch eine erste Trennwand 22, eine zweite Trennwand 23, eine dritte Trennwand 24 und eine vierte Trennwand 25, voneinander getrennt, wobei die Trennwände 22 bis 25 jeweils parallel zu den Deckeln 14 und 15 verlaufen.

Ein Einlaßstutzen 26 durchdringt die Wandung 16 und mündet in die erste Kammer 17 ein. Durch den Einlaßstutzen 26 treten somit die vom Dieselmotor 2 kommenden Abgase in die erste Kammer 17 des Gehäuses 13 ein.

Im Inneren des Gehäuses 13 sind außerdem drei Rohre, nämlich ein erstes Rohr 27, ein zweites Rohr 28 und ein drittes Rohr 29 untergebracht, die jeweils die erste Kammer 17 und zweite Kammer 18 kommunizierend miteinander verbinden. Zu diesem Zweck durchdringen die Rohre 27 bis 29 die zweite und die dritte Trennwand 23, 24, welche die beiden Kammern 17 und 18 voneinander trennen. Außerdem sind die Rohre 27 bis 29 durch die zwischen diesen beiden Trennwänden 23 und 24 ausgebildete dritte Kammer 19 gasdicht hindurchgeführt. Die Rohre 27 bis 29 sind an ihren, in die erste Kammer 17 hineinragenden stirnseitigen Enden offen ausgebildet und an ihren gegenüberliegenden stirnseitigen Enden geschlossen. Die Rohre 27 bis 29 besitzen in einem in der zweiten Kammer 18 verlaufenden Abschnitt jeweils eine radiale Perforation 30, durch welche ein Inneres der Rohre 27 bis 29 mit der zweiten Kammer 18 kommuniziert. Zweckmäßig verlaufen die Rohre 27 bis 29 parallel zueinander und enden an der vierten Trennwand 25, welche die zweite Kammer 18 von der vierten Kammer 20 trennt.

Im ersten Rohr 27 ist der Hydrolysekatalysator 6 angeordnet. Stromauf des Hydrolysekatalysators 6 ist die Harnstoffzuführungseinrichtung 8 angeordnet, die hier durch eine Einspritzdüse 31 gebildet ist, durch welche in Wasser gelöster Harnstoff in die Abgasströmung eingebracht, insbesondere eingesprüht wird. Die Harnstoffzuführungseinrichtung 8 besteht hier im wesentlichen aus der Einspritzdüse 31, so dass die Harnstoffzuführungseinrichtung 8 zumindest teilweise im Gehäuse 13 untergebracht ist.

In den beiden anderen Rohren, also im zweiten Rohr 28 und im dritten Rohr 29 ist jeweils ein Oxidationskatalysator 7 untergebracht. Über die Strömungswiderstände der Rohre 27 bis 29 und/oder der darin untergebrachten Katalysatoren 6, 7 kann die Aufteilung des in die erste Kammer 17 eintretenden Abgases auf die drei Rohre 27 bis 29 bestimmt werden. Die Strömungswiderstände durch die Rohre 27 bis 29 hängen dabei von den Strömungswiderständen der darin angeordneten Katalysatoren 6, 7 sowie von der Gestalt der Perforationen 30 ab. Die Strömungswiderstände der Katalysatoren 6, 7 kann beispielsweise über den Monolithquerschnitt, die Monolithlänge und die Zelldichte und ähnliche Parameter beeinflusst werden.

Das Gehäuse 13 enthält ein weiteres Rohr, nämlich ein viertes Rohr 32, in dem der SCR-Katalysator 5 untergebracht ist und das die dritte Kammer 19 mit der vierten Kammer 20 kommunizierend verbindet. Dabei ist das vierte Rohr 32 gasdicht durch die zweite Kammer 18 hindurchgeführt. Das vierte Rohr 32 ist an beiden axialen Stirnseiten offen und durchdringt einenends die zwischen der zweiten Kammer 18 und der dritten Kammer 19 angeordnete dritte Trennwand 24 und anderenends die zwischen der zweiten Kammer 18 und der vierten Kammer 20 angeordnete vierte Trennwand 25. Die Abgase gelangen von der zweiten Kammer 18 durch die zwischen der zweiten Kammer 18 und der dritten Kammer 19 angeordnete dritte Trennwand 24 in die dritte Kammer 19, wobei die dritte Trennwand 24 mit einer geeigneten Perforation 33 ausgestattet ist. Zweckmäßig erstreckt sich das vierte Rohr 32 parallel zu den anderen Rohren 27 bis 29.

Das Gehäuse 13 weist außerdem einen Auslaßstutzen 34 auf, der in die vierte Kammer 20 einmündet und am gegenüberliegenden, also von der vierten Kammer 20 entfernten Deckel 14 aus dem Gehäuse 13 herausgeführt ist. Der Auslaßstutzen 34 durchdringt dabei sämtliche Trennwände 23 bis 25 und ist gasdicht durch die übrigen Kammern 17, 18, 19, 21 hindurchgeführt. Innerhalb des Gehäuses 13 verläuft auch der Auslaßstutzen 34 zweckmäßig parallel zu den Rohren 27 bis 29.

Die fünfte Kammer 21 kann beispielsweise mit einem schalldämmenden Material ausgefüllt sein. Am Gehäuse 13 sind Halte-/Befestigungslaschen 35 angebracht, mit deren Hilfe der Schalldämpfer 12 an einem entsprechenden Träger, z.B. an einem Kraftfahrzeug, befestigt werden kann.

Der Schalldämpfer 12 gemäß Fig. 2 arbeitet wie folgt:

Die vom Dieselmotor 2 kommenden mageren Abgase treten über den Einlaßstutzen 26 in die erste Kammer 17 ein. Hier teilt sich der Abgasstrom auf die einzelnen Rohre 27 bis 29 auf, die dementsprechend die parallelen Abgaswege 10 bzw. 11 bilden. Am Einlass des ersten Rohrs 27 erfolgt die Eindüsung des Harnstoffs. Um dabei ein Eintreten des Harnstoffs in die erste Kammer 17 und somit in die anderen Abgaswege 11 durch die Rohre 28 und 29 zu vermeiden, ragt das erste Rohr 27 tiefer in die erste Kammer 17 hinein, so dass die Eindüsung des Harnstoffs bereits innerhalb des ersten Rohrs 27 erfolgen kann. Bei der Durchströmung des Hydrolysekatalysators 6 wird dann im Abgasweg 10 des ersten Rohrs 27 Ammoniak erzeugt, das durch die zugehörige Perforation 30 in die zweite Kammer 18 eintreten kann. Bei der Durchströmung der anderen Abgaswege 11 durch die Rohre 28 und 29 werden Stickoxide in NO₂ umgesetzt, das über die entsprechenden Perforationen 30 ebenfalls in die zweite Kammer 18 eintreten kann. Durch die Anordnung der Perforationen 30 innerhalb der zweiten Kammer 18 kann eine intensive Durchmischung der einzelnen Abgasteilströme und somit zwischen Ammoniak, NO₂ und Abgas erreicht werden. Von der zweiten Kammer 18 gelangt das Abgasgemisch durch die Perforation 33, also durch die dritte Trennwand 24 in die dritte Kammer 19. Anschließend können die Abgase von der dritten Kammer 19 durch das vierte Rohr 32, also durch den SCR-Katalysator 5 in die vierte Kammer 20 überströmen. Im SCR-Katalysator 5 erfolgt dabei die Umsetzung der Stickoxide mit Ammoniak zu Stickstoff und Wasser bzw. Wasserdampf. Aus der vierten Kammer 20 können die Abgase über den Auslaßstutzen 34 aus dem Gehäuse 13 austreten.

Ein besonderer Vorteil der erfindungsgemäßen Abgasanlage 1 bzw. des erfindungsgemäßen Schalldämpfers 12 ist anhand des Ausführungsbeispiels gemäß Fig. 2 besonders deutlich erkennbar. Denn die Parallelschaltung mehrerer Abgaswege durch die Rohre 27 bis 29 ermöglicht es, die Abgasanlage 1 im Bereich der Katalysatoren 5, 6, 7 besonders kompakt aufzubauen. Dabei wird durch die Integration der Katalysatoren 5, 6, 7 in den Schalldämpfer 12 eine besonders klein bauende Einheit bereit gestellt.

Bei der Ausführungsform gemäß Fig. 2 sind zwei Rohre, nämlich das zweite Rohr 28 und das dritte Rohr 29, mit jeweils einem Oxidationskatalysator 7 vorgesehen. Es ist klar, dass auch mehr oder weniger Rohre mit Oxidationskatalysatoren im Gehäuse 13 untergebracht werden können.

## Patentansprüche

1. Abgasanlage für einen Dieselmotor (2), insbesondere eines Kraftfahrzeugs,
- mit einem SCR-Katalysator (5), der im mageren Abgas Stickoxide mit Ammoniak zu Stickstoff und Wasser umsetzt,
- mit einem stromauf des SCR-Katalysators (5) angeordneten Hydrolysekatalysator (6), der im Abgas Harnstoff zu Ammoniak umsetzt,
- mit einer Harnstoffzuführungseinrichtung (8), die stromauf des Hydrolysekatalysators (6) Harnstoff in das Abgas einbringt,
- mit wenigstens einem stromauf des SCR-Katalysators (5) angeordneten Oxidationskatalysator (7), der im mageren Abgas Stickoxide zu NO₂ umsetzt,
- wobei die Abgasanlage (1) stromauf des SCR-Katalysators (5) zumindest zwei parallel geschaltete Abgaswege (10, 11) aufweist, die stromauf des SCR-Katalysators (5) zusammengeführt sind,
- wobei in dem einen Abgasweg (10) der Hydrolysekatalysator (6) und die Harnstoffzuführungseinrichtung (8) angeordnet sind,
- wobei im wenigstens einen anderen Abgasweg (11) der wenigstens eine Oxidationskatalysator (7) angeordnet ist,
**dadurch gekennzeichnet,**
- **dass** wenigstens zwei andere Abgaswege (11) vorgesehen sind, in denen jeweils wenigstens einer der Oxidationskatalysatoren (7) angeordnet ist,
- **dass** stromauf des SCR-Katalysators (5) und stromab des Hydrolysekatalysators (6) eine Mischeinrichtung (9) angeordnet ist, die eine die Mischeinrichtung (9) durchströmte Strömung durchmischt.

2. Abgasanlage nach Anspruch 1,
**dadurch gekennzeichnet,**
**dass** die Strömungswiderstände der Abgaswege (10, 11) hinsichtlich einer vorbestimmten Aufteilung des Abgasstroms auf den Hydrolysekatalysator (6) und den oder die Oxidationskatalysatoren (7) ausgebildet sind.

3. Abgasanlage nach Anspruch 1 oder 2,
**dadurch gekennzeichnet,**
**dass** die Abgasanlage (1) einen Schalldämpfer (12) aufweist, wobei wenigstens einer der Katalysatoren (6, 7) und/oder die Harnstoffzuführungseinrichtung (8) in einem Gehäuse (13) des Schalldämpfers (12) angeordnet ist bzw. sind.

4. Abgasanlage nach Anspruch 3,
**dadurch gekennzeichnet,**
**dass** die parallel geschalteten Abgaswege (10, 11) im Gehäuse (13) verlaufen, derart, dass der Hydrolysekatalysator (6) mit der Harnstoffzuführungseinrichtung (8) und der wenigstens eine Oxidationskatalysator (7) im Gehäuse (13) angeordnet sind.

5. Abgasanlage nach Anspruch 3 oder 4,
**dadurch gekennzeichnet,**
**dass** der SCR-Katalysator (5) im Gehäuse (13) angeordnet ist.

6. Schalldämpfer für eine Abgasanlage (1) eines Dieselmotors (2),
- mit einem Gehäuse (13), das einen Einlaßstutzen (26) für Abgas und einen Auslassstutzen (34) für Abgas aufweist,
- wobei im Gehäuse (13) ein SCR-Katalysator (5), der im mageren Abgas Stickoxide mit Ammoniak zu Stickstoff und Wasser umsetzt, ein stromauf des SCR-Katalysators (5) angeordneter Hydrolysekatalysator (6), der im Abgas Harnstoff zu Ammoniak umsetzt, eine Harnstoffzuführungseinrichtung (8), die stromauf des Hydrolysekatalysators (6) Harnstoff in das Abgas einbringt, und wenigstens ein, stromauf des SCR-Katalysators (5) angeordneter Oxidationskatalysator (7), der im mageren Abgas Stickoxide zu NO₂ umsetzt, untergebracht sind,
- wobei im Gehäuse (13) stromauf des SCR-Katalysators (5) zumindest zwei parallel geschaltete Abgaswege (10, 11) ausgebildet sind,
- wobei in dem einen Abgasweg (10) der Hydrolysekatalysator (6) und die Harnstoffzuführungseinrichtung (8) angeordnet sind, wobei im wenigstens einen anderen Abgasweg (11) der wenigstens eine Oxidationskatalysator (7) angeordnet ist,
- wobei das Gehäuse (13) eine erste Kammer (17) und eine zweite Kammer (18) enthält,
- wobei der Einlaßstutzen (26) in die erste Kammer (17) einmündet,
- wobei die parallel geschalteten Abgaswege (10, 11) durch Rohre (27, 28, 29) gebildet sind, die jeweils für sich die erste Kammer (17) mit der zweiten Kammer (18) kommunizierend verbinden,
- wobei in dem einen Rohr (27) der Hydrolysekatalysator (6) und die Harnstoffzuführungseinrichtung (8) untergebracht sind, wobei in dem wenigstens einen anderen Rohr (28, 29) jeweils wenigstens ein Oxidationskatalysator (7) untergebracht ist,
**dadurch gekennzeichnet,**
- **dass** das Gehäuse (13) eine dritte Kammer (19) enthält, die zwischen der ersten Kammer (17) und der zweiten Kammer (18) angeordnet ist,
- **dass** die Rohre (27, 28, 29) die dritte Kammer (19) gasdicht durchdringen,
- **dass** eine die zweite Kammer (18) von der dritten Kammer (19) trennende Trennwand (24) perforiert (33) ist,
- **dass** ein weiteres Rohr (32), in dem der SCR-Katalysator (5) angeordnet ist, eingangsseitig in diese dritte Kammer (19) einmündet.

7. Schalldämpfer nach Anspruch 6,
**dadurch gekennzeichnet,**
**dass** das weitere Rohr (32) die zweite Kammer (19) gasdicht durchdringt und ausgangsseitig in eine vierte Kammer (20) einmündet, in welche außerdem der Auslaßstutzen (34) einmündet.

8. Schalldämpfer nach Anspruch 7,
**dadurch gekennzeichnet,**
**dass** der Auslaßstutzen (34) die erste Kammer (17), die zweite Kammer (18) und die dritte Kammer (19) gasdicht durchdringt.

9. Schalldämpfer nach einem der Ansprüche 6 bis 8,
**dadurch gekennzeichnet,**
**dass** wenigstens eines der Rohre (27, 28, 29) stromab des jeweiligen Katalysators (6, 7) durch eine radiale Perforation (30) mit der zweiten Kammer (18) kommuniziert.

10. Schalldämpfer nach einem der Ansprüche 6 bis 9,
**dadurch gekennzeichnet,**
**dass** wenigstens zwei der Rohre (27, 28, 29, 32) parallel zueinander verlaufen.

## Claims

1. An exhaust system for a diesel engine (2), in particular in a motor vehicle,
- having an SCR catalytic converter (5) which reacts nitrogen oxides in lean exhaust gas with ammonia to form nitrogen and water,
- having a hydrolysis catalyst (6) upstream from the SCR catalytic converter (5), reacting urea in the exhaust gas to form ammonia,
- having a urea supply device (8) which introduces urea into the exhaust gas upstream from the hydrolysis catalyst (6),
- having at least one oxidation catalyst (7) situated upstream from the SCR catalytic converter (5), converting nitrogen oxides in the lean exhaust gas to NO₂,
- the exhaust system (1) has at least two parallel exhaust paths (10, 11) which are combined upstream from the SCR catalytic converter (5),
- the hydrolysis catalyst (6) and the urea supply device (8) being situated in an exhaust path (10),
- the at least one oxidation catalyst (7) being provided in the at least one other exhaust path (11),
**characterized in that**
- at least two other exhaust paths (11) are provided, at least one of the oxidation catalysts (7) being arranged in each
- a mixing device (9) which thoroughly mixes a flow passing through the mixing device (9) is provided upstream from the SCR catalytic converter (5) and downstream from the hydrolysis catalyst (6).

2. The exhaust system according to claim 1, **characterized in that**
the flow resistances of the exhaust paths (10, 11) are designed with respect to a predetermined division of the exhaust stream between the hydrolysis catalyst (6) and the oxidation catalyst(s) (7).

3. The exhaust system according to claim 1 or 2,
**characterized in that**
the exhaust system (1) has a muffler (12), at least one of the catalysts (6, 7) and/or the urea supply device (8) being arranged in a housing (13) of the muffler (12).

4. The exhaust system according to one of claims 1 through 3,
**characterized in that**
the gas paths (10, 11) connected in parallel run in the housing (13), such that the hydrolysis catalyst (6) together with the urea supply device (8) and the at least one oxidation catalyst (7) are arranged in the housing (13).

5. The exhaust system according to one of claims 1 through 3,
**characterized in that**
the SCR catalytic converter (5) is arranged in the housing (13).

6. A muffler for an exhaust system (1) of a diesel engine (2),
- having a housing (13), which has an inlet connection (26) for exhaust gas and an outlet connection (34) for exhaust gas,
- whereby an SCR catalytic converter (5) is provided in the housing (13), reacting nitrogen oxides in the lean exhaust gas with ammonia to form nitrogen and water; a hydrolysis catalyst (6) is arranged upstream from the SCR catalytic converter (5) and reacts urea in the exhaust gas to form ammonia; a urea supply device (8) is provided for introducing urea into the exhaust gas upstream from the hydrolysis catalyst (6) and at least one oxidation catalyst (7) is arranged upstream from the SCR catalytic converter (5), reacting nitrogen oxides in the lean exhaust gas to form NO₂,
- whereby at least two exhaust paths (10, 11) connected in parallel are provided in the housing (13) upstream from the SCR catalytic converter (5),
- whereby the hydrolysis catalyst (6) and the urea supply device (8) are arranged in one exhaust path (10), the at least one oxidation catalyst (7) being provided in the at least one other exhaust path (11),
- whereby the housing (13) has a first chamber (17) and a second chamber (18),
- whereby the inlet connection (26) opens into the first chamber (17),
- whereby the exhaust paths (10, 11) that are connected in parallel are formed by pipes (27, 28, 29), each pipe connecting the first chamber (17) to the second chamber (18) so they communicate,
- whereby the hydrolysis catalyst (6) and the urea supply device (8) are accommodated in the one pipe (27), at least one oxidation catalyst (7) being accommodated in the at least one other pipe (28, 29),
**characterized in that**
- the housing (13) has a third chamber (19), which is arranged between the first chamber (17) and the second chamber (18),
- the pipes (27, 28, 29) pass through the third chamber (19) with an airtight connection,
- the partition (24) separating the first chamber (18) from the third chamber (19) is perforated (33),
- an additional pipe (32) in which the SCR catalytic converter (5) is arranged opens at the input end into this third chamber (19).

7. The muffler according to claim 6,
**characterized in that**
the additional pipe (32) passes through the second chamber (19) with an airtight connection and opens at the output end into a fourth chamber (20), into which the outlet connection (34) also opens.

8. The muffler according to claim 7,
**characterized in that**
the outlet connection (34) passes through the first chamber (17), the second chamber (18) and the third chamber (19) in an airtight connection.

9. The muffler according to any one of claims 6 to 8,
**characterized in that**
at least one of the pipes (27, 28, 29) downstream from the particular catalyst (6, 7) communicates with the second chamber (18) through a radial perforation (30).

10. The muffler according to any one of claims 6 to 9,
**characterized in that**
at least two of the pipes (27, 28, 29, 32) run parallel to one another.

## Revendications

1. Installation de gaz d'échappement pour un moteur diesel (2), notamment d'un véhicule automobile,
- comportant un catalyseur SCR (5), qui convertit dans le gaz d'échappement pauvre de l'oxyde d'azote avec de l'ammoniaque en azote et eau,
- comportant un catalyseur d'hydrolyse (6) disposé en amont du catalyseur SCR (5), qui convertit dans le gaz d'échappement l'urée en ammoniaque,
- comportant un dispositif d'alimentation en urée (8), qui apporte en amont du catalyseur d'hydrolyse (6) l'urée dans le gaz d'échappement,
- comportant au moins un catalyseur d'oxydation (7) disposé en amont du catalyseur SCR (5), qui convertit dans le gaz d'échappement pauvre l'oxyde d'azote en NO₂,
- dans laquelle l'installation de gaz d'échappement (1) présente en amont du catalyseur SCR (5) au moins deux trajets de gaz d'échappement (10,11) parallèles, qui sont guidés conjointement en amont du catalyseur SCR (5),
- dans laquelle dans un des trajets de gaz d'échappement (10) le catalyseur d'hydrolyse (6) et le dispositif d'alimentation en urée (8) sont disposés,
- dans laquelle dans au moins un autre trajet de gaz d'échappement (11) au moins un catalyseur d'oxydation (7) est disposé,
**caractérisé en ce que**
- au moins deux autres trajets de gaz d'échappement (11) sont prévus, dans lesquels respectivement au moins un des catalyseurs d'oxydation (7) est disposé,
- en mont du catalyseur SCR (5) et en aval du catalyseur d'hydrolyse (6) un dispositif de mélange (9) est disposé, qui mélange un écoulement traversé par le dispositif de mélange (9).

2. Installation d'échappement selon la revendication 1, **caractérisée en ce que** les résistances à l'écoulement des trajets de gaz d'échappement (10,11) sont conçues en vue d'une division prédéterminée du courant de gaz d'échappement sur le catalyseur d'hydrolyse (6) et le ou les catalyseurs d'oxydation (7).

3. Installation de gaz d'échappement selon la revendication 1 ou 2,
**caractérisée en ce que**,
l'installation de gaz d'échappement (1) présente un silencieux d'échappement (12), dans laquelle au moins un des catalyseurs (6,7) et/ou le dispositif d'alimentation en urée (8) est ou sont disposés dans un carter (13) du silencieux d'échappement (12).

4. Installation de gaz d'échappement selon la revendication 3,
**caractérisée en ce que**,
les trajets de gaz d'échappement parallèles (10,11) s'étendent dans le carter (13) de telle sorte que le catalyseur d'hydrolyse (6) soit disposé avec le dispositif d'alimentation en urée (8) et au moins un catalyseur d'oxydation (7) dans le carter (13).

5. Installation de gaz d'échappement selon la revendication 3 ou 4,
**caractérisée en ce que**,
le catalyseur SCR (5) est disposé dans le carter (13).

6. Silencieux d'échappement pour une installation de gaz d'échappement (1) d'un moteur diesel (2),
- comportant un carter (13), qui présente un embout d'admission (26) pour le gaz d'échappement et un embout de sortie (34) pour le gaz d'échappement,
- dans lequel dans le carter (13) un catalyseur SCR (5), qui convertit dans le gaz d'échappement pauvre l'oxyde d'azote avec l'ammoniaque en azote et eau, un catalyseur d'hydrolyse (6) disposé en amont du catalyseur SCR (5), qui convertit dans le gaz d'échappement l'urée en ammoniaque, un dispositif d'alimentation en urée (8), qui apporte en amont du catalyseur d'hydrolyse (6) l'urée dans le gaz d'échappement, et au moins un catalyseur d'oxydation (7) disposé en amont du catalyseur SCR (5), qui convertit dans le gaz d'échappement pauvre l'oxyde d'azote en NO₂ sont renfermés,
- dans lequel dans le carter (13) en amont du catalyseur SCR (5) au moins deux trajets de gaz d'échappement parallèles (10,11) sont réalisés,
- dans lequel dans un des trajets de gaz d'échappement (10) le catalyseur d'hydrolyse (6) et le dispositif d'alimentation en urée (8) sont disposés, dans lequel dans au moins un autre trajet de gaz d'échappement (11) au moins un catalyseur d'oxydation (7) est disposé,
- dans lequel le carter (13)contient une première chambre (17) et une deuxième chambre (18),
- dans lequel les embouts d'admission (26) débouchent dans la première chambre (17),
- dans lequel les trajets de gaz d'échappement parallèles (10,11) sont formés par des tuyaux (27,28,29), qui relient de manière communicante la première chambre (17) à la deuxième chambre (18),
- dans lequel dans un des tuyaux (27) le catalyseur d'hydrolyse (6) et le dispositif d'alimentation en urée (8) sont renfermés, dans lequel dans au moins un autre tuyau (28,29) un catalyseur d'oxydation (7) est respectivement disposé,
**caractérisé en ce que**,
- le carter (13) contient une troisième chambre (19), qui est disposée entre la première chambre (17) et la deuxième chambre (18),
- les tuyaux (27,28,29) traversent la troisième chambre (19) de manière étanche aux gaz,
- une paroi de séparation (24) séparant la deuxième chambre (18) de la troisième chambre (19) est perforée (33),
- un tuyau supplémentaire (32), dans lequel le catalyseur SCR (5) est disposé, débouche du côté d'entrée dans cette troisième chambre (19).

7. Silencieux d'échappement selon la revendication 6,
**caractérisé en ce que**,
le tuyau supplémentaire (32) traverse la deuxième chambre (19) de manière étanche aux gaz et débouche du côté de sortie dans une quatrième chambre (20), dans laquelle les embouts d'échappement (34) débouchent en outre.

8. Silencieux d'échappement selon la revendication 7,
**caractérisé en ce que**,
l'embout d'échappement (34) traverse la première chambre (17), la deuxième chambre (18) et la troisième chambre (19) de manière étanche aux gaz.

9. Silencieux d'échappement selon une des revendications 6 à 8,
**caractérisé en ce que**,
au moins un des tuyaux (27,28,29) communique en aval d du catalyseur respectif (6,7) à travers une perforation radiale (30) avec la deuxième chambre (18).

10. Silencieux d'échappement selon une des revendications 6 à 9,
**caractérisé en ce que**,
au moins deux des tuyaux (27,28,29,30) s'étendent parallèlement l'un à l'autre.
